# EUROPÄISCHE PATENTANMELDUNG

(11) **EP 2 264 557 A1**
(43) Veröffentlichungstag der Anmeldung: **22.12.2010**
(21) Anmeldenummer: 10176474.4
(22) Anmeldetag: 05.07.2002
(51) Int. Cl.: G05B 19/401, G01B 11/00

(54) **Verfahren zum Messen eines Objektes mit einem Koordinatenmessgerät mit Bildverarbeitungssenor**

(30) Priorität: 16.07.2001 DE 10133839
(62) Teilanmeldung aus: 02762323.0
(71) Anmelder: Werth Messtechnik GmbH, 35394 Giessen (DE)
(72) Erfinder: Christoph, Dr., Ralf, 35394, Gießen (DE)
(74) Vertreter: Stoffregen, Hans-Herbert

(57) **Zusammenfassung**

Um mit hoher Präzision und Flexibilität Objekte mit einem Koordinatenmessgerät messen zu können, werden folgende Verfahrensschritte vorgeschlagen: grobes Ausrichten des Bildverarbeitungssensors auf zu messende Position des Objektes, wobei beim Ausrichten des Bildverarbeitungssensors dieser mit einer Beschleunigung a₁ > 0 mm/s² bewegt wird, und Abbremsen des Bildverarbeitungssensors und Messen der Position bei bewegtem Bildverarbeitungssensor bei einer Beschleunigung a₂ mit 0 mm/s² ≤ a₂ < a₁.

## Beschreibung

Die Erfindung bezieht sich auf ein Verfahren zum Messen eines Objektes mit einem Koordinatenmessgerät mit Bildverarbeitungssensor.

Um eine präzise und hochgenaue geometrische Erfassung unterschiedlicher Werkstücke zu ermöglichen, gelangen optische bzw. optoelektronische Messverfahren zum Einsatz. Hauptvorteil dieser ist deren hohe Flexibilität und Verarbeitungsgeschwindigkeit. Zudem stellt die Messung bzw. Prüfung mit CCD-Kameras als Bildverarbeitungssensoren eine Technologie dar, die der menschlichen Wahrnehmung ähnlich ist und daher für viele industrielle Aufgabenstellungen prinzipiell geeignet ist. Stufen der Bildverarbeitungen bilden dabei Bildaufnahme, Bildaufbereitung und -übertragung sowie Bildverarbeitung.

Die Messung eines Objektes bzw. eines Messpunktes oder Messbereiches erfolgt bei stillstehendem Bildverarbeitungssensor bzw. CCD-Kamera. Hierdurch erfährt die Messgeschwindigkeit Einbußen.

Der vorliegenden Erfindung liegt das Problem zu Grunde, ein Verfahren der eingangs genannten Art so weiterzubilden, dass bei hoher Präzision und Flexibilität mit hoher Messgeschwindigkeit gemessen werden kann.

Gelöst wird das Problem durch ein Verfahren zum Messen eines Objektes mit einem Koordinatenmessgerät mit Bildverarbeitungssensor, das gekennzeichnet ist durch die Verfahrensschritte:
- grobes Ausrichten des Bildverarbeitungssensors auf zu messende Position des Objektes, wobei der Bildverarbeitungssensor während des oder vor dem groben Ausrichten mit einer Beschleunigung a₁ > 0 mm/s² bewegt wird, und
- Abbremsen des Bildverarbeitungssensors und Messen der Position bei bewegtem Bildverarbeitungssensor mit einer Beschleunigung a₂ mit 0 mm/s² ≤ a₂ < a₁.

Insbesondere wird das Problem durch ein Verfahren zum Messen eines Objektes mit einem Koordinatenmessgerät mit Bildverarbeitungssensor gelöst, welches durch die folgenden Verfahrensschritte gekennzeichnet ist:
- grobes Ausrichten des Bildverarbeitungssensor auf zu messende Position des Objektes, wobei der Bildverarbeitungssensor während des oder vor dem groben Ausrichten mit einer Beschleunigung a₁ > 0mm/s² bewegt wird, und
- Abbremsen des Bildverarbeitungssensors und Messen der Position bei bewegtem Bildverarbeitungssensor bei einer Beschleunigung a₂ mit 0 mm/s² ≤ a₂ < a₁, wobei das Messen das Ansteuern des Koordinatenmessgerätes in Bezug auf seine Achsen X, Y, Z sowie Drehachse A und das Aufnehmen des Bildes im Bildverarbeitungssensor umfasst und das Objekt während der Messung mit einem Lichtblitz beaufschlagt und/oder als Bildverarbeitungssensor eine CCD-Kamera mit Shutter verwendet wird.

Auch wird das Problem durch ein Verfahren zum Messen eines Objektes mit einem Koordinatenmessgerät mit Bildverarbeitungssensor gelöst, welches durch die folgenden Verfahrensschritte gekennzeichnet ist:
- grobes Ausrichten des Bildverarbeitungssensor auf zu messende Position des Objektes, wobei der Bildverarbeitungssensor während des oder vor dem groben Ausrichten beschleunigt bewegt wird, und
- Abbremsen des Bildverarbeitungssensors und Messen der Position bei bewegtem Bildverarbeitungssensor, wobei das Messen das Ansteuern des Koordinatenmessgerätes in Bezug auf seine Achsen X, Y, Z sowie Drehachse A und das Aufnehmen des Bildes im Bildverarbeitungssensor umfasst und das Objekt während der Messung mit einem Lichtblitz beaufschlagt und/oder als Bildverarbeitungssensor eine CCD-Kamera mit Shutter verwendet wird.

Dadurch, dass das Objekt während der Messung mit einem Lichtblitz beaufschlagt und/oder als Bildverarbeitungssensor eine CCD-Kamera mit Shutter verwendet wird, erfolgt eine Korrelation zwischen Bewegung des Sensors und jeweils aufzunehmenden Bild, wobei durch den Lichtblitz bzw. den Shutter ein scheinbares Anhalten des Bildverarbeitungssensors realisiert wird mit der Folge, dass Messungen so durchgeführt werden, als wenn der Bildverarbeitungssensor während der Messung stillstehen würde.

Erfindungsgemäß wird demzufolge der Bildverarbeitungssensor durch das Koordinatenmessgerät nur grob auf die zu messende Position bewegt und dann bei weiterhin bewegtem, jedoch grundsätzlich nicht beschleunigtem Bildverarbeitungssensor, der mit einer Geschwindigkeit v₁ von zum Beispiel 50 - 200 mm/s bewegt werden kann, zu messen. Dabei kann das zum Messen erforderliche Bildspeichern im Bildverarbeitungssensor durch Erreichen eines Zielbereichs erkannt werden. So kann das Abbremsen durch optisches Erfassen von die Position enthaltenden Bereichs des Objektes mittels des Bildverarbeitungssensors eingeleitet werden.

Insbesondere sieht die Erfindung eine Bewegung des Bildverarbeitungssensors derart vor, dass bei der Geschwindigkeit v₁ das Objekt bzw. Messbereiche oder Messpunkte dieses gemessen werden, anschließend der Bildverarbeitungssensor stark beschleunigt wird, zum Beispiel auf einen Wert von in etwa 5.000 - 15.000 mm/s, um sodann bei einer Beschleunigung 0 mm/s² bei einer Geschwindigkeit v₂ zwischen 400 und 600 mm/s auf den Messbereich bzw. Messpunkt grob ausgerichtet zu werden. Sodann erfolgt ein Abbremsen des Bildverarbeitungssensors auf die Geschwindigkeit v₁ im Bereich zwischen vorzugsweise 50 mm/s und 150 mm/s, um zu messen. Während dieser Zeit kann das Objekt bzw. der zu messende Bereich mit Lichtblitzen beaufschlagt werden bzw. der Shutter des Bildverarbeitungssensors in der gewünschten Frequenz geöffnet und geschlossen werden. Nach erfolgter Messung wird sodann der Bildverarbeitungssensor im zuvor beschriebenen Sinne beschleunigt, um auf einen neuen Messpunkt bzw. -bereich ausgerichtet zu werden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung der Zeichnungen.

Es zeigen:
- Fig. 1: eine Prinzipdarstellung eines Koordinatenmessgerätes,
- Fig. 2: einen Bewegungsablauf eines Bildverarbeitungssensors im Geschwindig- keits-beschleunigungs-Diagramm und
- Fig. 3: ein Blockschaltbild.

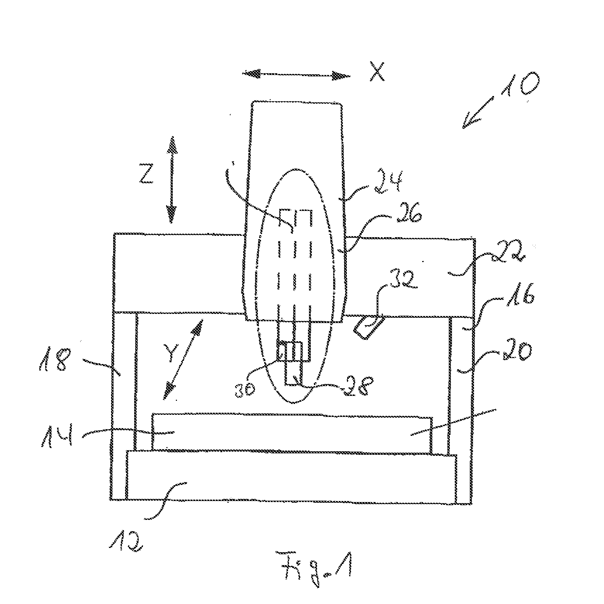

In Fig. 1 ist rein prinzipiell ein optisch arbeitendes Koordinatenmessgerät 10 dargestellt, das in bekannter Weise einen Grundrahmen 12 aufweist, auf dem ein Messtisch 14 angeordnet ist. Auf diesem wird sodann ein nicht dargestelltes Objekt positioniert, das gemessen werden soll. Entlang dem Grundrahmen 12 ist ein Portal 16 in Y-Richtung verstellbar. Hierzu sind Säulen oder Ständer 18, 20 gleitend auf dem Grundrahmen 12 abgestützt. Von den Säulen 18, 20 geht eine Traverse 22 aus, entlang der, also in X-Richtung, ein Schlitten 24 verstellbar ist, der seinerseits eine Pinole oder Säule 26 aufweist, die in Z-Richtung verstellbar ist. Von der Pinole oder Säule 26 geht ein Bildverarbeitungssensor 28 aus.

In der Pinole ist des Weiteren ein Abstandssensor 30 integriert, um beim Messen des Objektes dessen Höhenprofil zu bestimmen. Schließlich geht vorzugsweise von der Traverse 22, gegebenenfalls auch von der Pinole 26, eine Beleuchtungseinheit 32 wie Stroboskop aus, um während des Messen des Objektes dieses mit Lichtblitzen zu beaufschlagen.

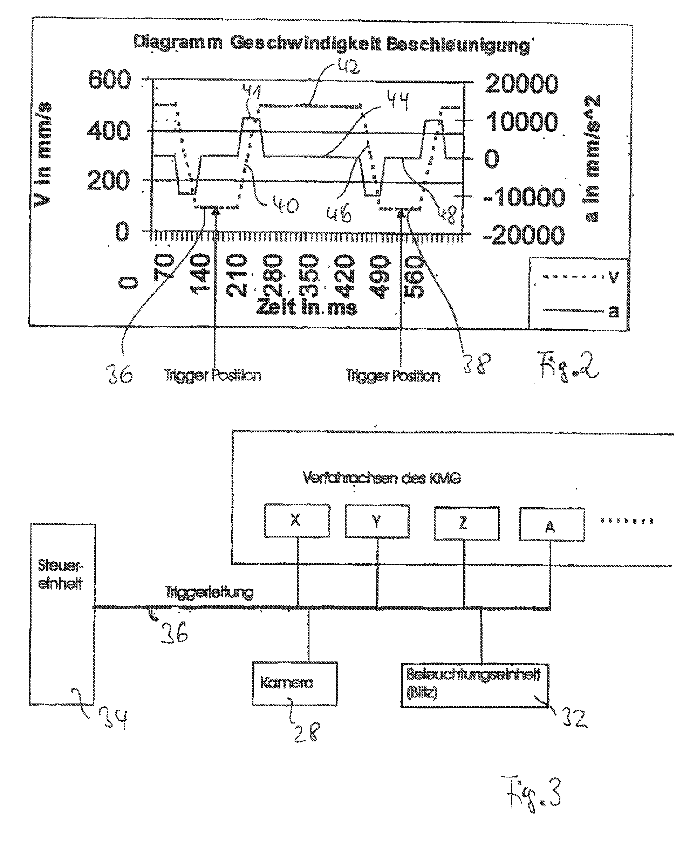

Um mittels des Bildverarbeitungssensors 28 wie CCD-Kamera ein Objekt zu messen, ist erfindungsgemäß vorgesehen, dass der Bildverarbeitungssensor 28 grob auf eine zu messende Position ausgerichtet ist, um sodann noch während seiner Bewegung das Objekt zu messen. Hierzu ist eine Steuereinheit 34 vorgesehen, die über eine Steuer- oder Triggerleitung 36 zum einen das Koordinatenmessgerät in Bezug auf seine Achsen X, Y, Z sowie Drehachse A, und zum anderen den in Fig. 3 als Kamera bezeichneten Sensor 28 sowie die Beleuchtungseinheit 32 ansteuert und einstellt, bei der es sich um ein Stroboskop handeln kann. Gesteuert wird auch ein der Kamera 28 vorgeordneter Shutter, sofern durch diesen die Dauer der Positionserfassung des Objekts bestimmt wird.

In der Fig. 2 ist ein Geschwindigkeits-Beschleunigungs-Diagramm für die Bewegung des Sensors 28 wiedergegeben. Dabei wird durch die gestrichelte Linie die Geschwindigkeit und durch die durchgezogene Linie die Beschleunigung des Sensors 28 prinzipiell wiedergegeben. Die mit "Trigger Position" gekennzeichneten Bereiche 36, 38 stellen diejenigen dar, in denen eine Messung erfolgt. Dabei wird entsprechend dem Ausführungsbeispiel der Sensor 28 mit einer Geschwindigkeit von zum Beispiel 100 mm/sec. bewegt. Während der Messung, also während der Zeit 36, 38 wird der Sensor 18 nicht beschleunigt. Nach der Messung erfolgt eine Beschleunigung (Bereiche 40 bzw. 41), um sodann während des Grobpositionieren des Sensors 28 auf den Messbereich den Sensor 28 bei fehlender Beschleunigung (Gerade 44) mit einer Geschwindigkeit von zum Beispiel 500 mm/s zu bewegen (Bereich 42). Nachdem die Grobausrichtung erfolgt ist (Ende der Zeitstrecke 46), wird der Sensor 28 negativ beschleunigt, also abgebremst (Flanke 44), um sodann bei fehlender Beschleunigung (Gerade 48) mit einer Geschwindigkeit von zum Beispiel 100 mm/s während des Messens verfahren zu werden, wobei der Shutter bzw. das Stroboskop wirksam werden.

Um den Bildverarbeitungssensor 28 wie die CCD-Kamera auf den Messbereich scharf einzustellen, wird über den Abstandssensor 30 der Abstand zum Objekt bzw. dessen Höhenprofil gemessen. Hierdurch ist sichergestellt, dass Messfehler durch unscharfes Abbilden des Messbereiches ausgeschlossen werden.

Um die Genauigkeit der Messung zu verbessern, wird Beginn und Ende der jeweiligen Bildaufnahme, also die Zeitdifferenz Δt in eine Wegstrecke umgerechnet. Beginnt zum Beispiel die Bildaufnahme bei der Zeit t₁, die einem Abstand Z₁ entspricht, und endet die Bildaufnahme bei der Zeit t₂, die einem Abstand Z₂ entspricht, so wird der Messung der Abstand (z₁ + z₂) : 2 zugeordnet. Gleiches gilt für die anderen Koordinaten.

## Patentansprüche

1. Verfahren zum Messen eines Objektes mit einem Koordinatenmessgerät mit Bildverarbeitungssensor **gekennzeichnet durch** die Verfahrensschritte:
- grobes Ausrichten des Bildverarbeitungssensor auf zu messende Position des Objektes, wobei der Bildverarbeitungssensor während des oder vor dem groben Ausrichten mit einer Beschleunigung a₁ > 0mm/s² bewegt wird, und
- Abbremsen des Bildverarbeitungssensors und Messen der Position bei bewegtem Bildverarbeitungssensor bei einer Beschleunigung a₂ mit 0 mm/s² ≤ a₂ < a₁, wobei das Messen das Ansteuern des Koordinatenmessgerätes in Bezug auf seine Achsen X, Y, Z sowie Drehachse A und das Aufnehmen des Bildes im Bildverarbeitungssensor umfasst und das Objekt während der Messung mit einem Lichtblitz beaufschlagt und/oder als Bildverarbeitungssensor eine CCD-Kamera mit Shutter verwendet wird.

2. Verfahren zum Messen eines Objektes mit einem Koordinatenmessgerät mit Bildverarbeitungssensor **gekennzeichnet durch** die Verfahrensschritte:
- grobes Ausrichten des Bildverarbeitungssensor auf zu messende Position des Objektes, wobei der Bildverarbeitungssensor während des oder vor dem groben Ausrichten beschleunigt bewegt wird, und
- Abbremsen des Bildverarbeitungssensors und Messen der Position bei bewegtem Bildverarbeitungssensor, wobei das Messen das Ansteuern des Koordinatenmessgerätes in Bezug auf seine Achsen X, Y, Z sowie Drehachse A und das Aufnehmen des Bildes im Bildverarbeitungssensor umfasst und das Objekt während der Messung mit einem Lichtblitz beaufschlagt und/oder als Bildverarbeitungssensor eine CCD-Kamera mit Shutter verwendet wird.

3. Verfahren nach Anspruch 2,
**gekennzeichnet durch** die Verfahrensschritte:
- grobes Ausrichten des Bildverarbeitungssensors auf zu messende Position des Objektes, wobei beim Ausrichten des Bildverarbeitungssensors dieser mit einer Beschleunigung a₁ > 0 mm/s² bewegt wird, und
- Abbremsen des Bildverarbeitungssensors und Messen der Position bei bewegtem Bildverarbeitungssensor bei einer Beschleunigung a₂ mit 0 mm/s² ≤ a₂<A₁.

4. Verfahren nach zumindest einem der vorhergehenden Ansprüche,
**dadurch gekennzeichnet,**
**dass** der Bildverarbeitungssensor während der Messung in X- und/oder Y- und/oder Z-Achsenrichtung des Koordinatenmessgerätes und/oder um zumindest eine vorgegebene Drehachse A bewegt wird.

5. Verfahren nach zumindest einem der vorhergehenden Ansprüche,
**dadurch gekennzeichnet,**
**dass** das Abbremsen durch optisches Erfassen von die Position enthaltendem Bereich des Objekts eingeleitet wird.

6. Verfahren nach zumindest einem der vorhergehenden Ansprüche,
**dadurch gekennzeichnet,**
**dass** zum Einstellen von Arbeitsabstand des Bildverarbeitungssensors auf die Position oder einen die Position enthaltenden Bereich ein Abstandssensor verwendet wird.

7. Verfahren nach zumindest einem der vorhergehenden Ansprüche,
**dadurch gekennzeichnet,**
**dass** während der Bewegung des Bildverarbeitungssensors mittels eines mit dem Bildverarbeitungssensor integrierten oder diesem zugeordneten Abstandssensors Höhenprofil des Objektes zur Scharfeinstellung des Bildverarbeitungssensors gemessen wird.

8. Verfahren nach zumindest einem der vorhergehenden Ansprüche,
**dadurch gekennzeichnet,**
**dass** während des Messens der Position der Bildverarbeitungssensor mit der Beschleunigung a₂ = 0 mm/s² bewegt wird.

9. Verfahren nach zumindest einem der vorhergehenden Ansprüche,
**dadurch gekennzeichnet,**
**dass** während des Messens der Position der Bildverarbeitungssensor mit einer Geschwindigkeit v₁ mit 20 mm/s ≤ v₁ ≤ 200 mm/s, insbesondere 50 mm/s ≤ v₁ ≤ 150 mm/s bewegt wird.

10. Verfahren nach zumindest einem der vorhergehenden Ansprüche,
**dadurch gekennzeichnet,**
**dass** der Bildverarbeitungssensor nach einer Messung beschleunigt, dann zum Grobpositionieren des Bildverarbeitungssensors mit nahezu konstanter Geschwindigkeit v₂ weiterbewegt, unmittelbar vor der Messung abgebremst und während der Messung mit der Geschwindigkeit v₁ bewegt wird.

11. Verfahren nach zumindest einem der vorhergehenden Ansprüche,
**dadurch gekennzeichnet,**
**dass** der Bildverarbeitungssensor während des Grobpositionierens mit der Geschwindigkeit v₂ mit vorzugsweise 100 mm/s ≤ v₂ ≤ 1000 mm/s bewegt wird.
